(19) Europäisches Patentamt
European Patent Office
Office européen des brevets

(11) **EP 2 497 043 B1**

(12) **EUROPEAN PATENT SPECIFICATION**

(45) Date of publication and mention of the grant of the patent:
**11.10.2017 Bulletin 2017/41**

(21) Application number: **09850991.2**

(22) Date of filing: **02.11.2009**

(51) Int Cl.:
**G06F 19/00** (2011.01)    **G01V 1/34** (2006.01)
**G01V 1/28** (2006.01)

(86) International application number:
**PCT/US2009/062911**

(87) International publication number:
**WO 2011/053327 (05.05.2011 Gazette 2011/18)**

(54) **SEISMIC IMAGING SYSTEMS AND METHODS EMPLOYING A 3D REVERSE TIME MIGRATION WITH TILTED TRANSVERSE ISOTROPY**

SEISMISCHE BILDGEBUNGSSYSTEME UND VERFAHREN MIT 3D-UMKEHRZEITMIGRATION MIT GENEIGTER TRANSVERSER ISOTROPIE

SYSTÈMES D'IMAGERIE SISMIQUE ET PROCÉDÉS EMPLOYANT UNE MIGRATION TRIDIMENSIONNELLE INVERSE DE TEMPS AVEC UNE ISOTROPIE TRANSVERSE INCLINÉE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**12.09.2012 Bulletin 2012/37**

(73) Proprietor: **Landmark Graphics Corporation Houston, TX 77042 (US)**

(72) Inventors:
• **JIANG, Fan**
  **Lubbock, TX 79415 (US)**
• **JIN, Shengwen**
  **Sugar Land**
  **TX 77479 (US)**

(74) Representative: **Hoffmann Eitle**
**Patent- und Rechtsanwälte PartmbB**
**Arabellastraße 30**
**81925 München (DE)**

(56) References cited:
**US-A1- 2008 137 480    US-A1- 2009 213 693**
**US-A1- 2009 213 693    US-B1- 6 446 007**

• **MCMECHAN G A: "Migration by extrapolation of time-dependent boundary values", GEOPHYSICAL PROSPECTING, BLACKWELL SCIENCE, vol. 31, no. 3, 1 June 1983 (1983-06-01), pages 413-420, XP008092017, ISSN: 0016-8025, DOI: 10.1111/J.1365-2478.1983.TB01060.X**
• **FLETCHER R P ET AL: "Reverse time migration in tilted transversely isotropic (TTI) media", GEOPHYSICS, SOCIETY OF EXPLORATION GEOPHYSICISTS, US, vol. 74, no. Suppl. of 6, 1 November 2009 (2009-11-01), pages WCA179-WCA187, XP001550463, ISSN: 0016-8033, DOI: 10.1190/1.3269002 & "proof of date for XP001550463", , 21 November 2014 (2014-11-21), XP055154227, Retrieved from the Internet: URL:geophysics.geoscienceworld.org/content /74/6/WCA179.full.pdf+html [retrieved on 2014-11-01]**
• **PRIOUL R ET AL: "Nonlinear rock physics model for estimation of 3D subsurface stress in anisotropic formations: Theory and laboratory verification", GEOPHYSICS, SOCIETY OF EXPLORATION GEOPHYSICISTS, US, vol. 69, no. 2, 1 March 2004 (2004-03-01), pages 415-425, XP002481093, ISSN: 0016-8033, DOI: 10.1190/1.1707061 [retrieved on 2003-09-18]**

- SUSAN E. MINKOFF: "Spatial Parallelism of a 3D Finite Difference Velocity-Stress Elastic Wave Propagation Code", SIAM JOURNAL ON SCIENTIFIC COMPUTING, vol. 24, no. 1, 1 January 2002 (2002-01-01), pages 1-19, XP055154422, ISSN: 1064-8275, DOI: 10.1137/S1064827501390960
- Houzhu James Zhang ET AL: "Reverse Time Migration in 3D Heterogeneous TTI Media", , 14 November 2008 (2008-11-14), XP055154506, Retrieved from the Internet: URL:https://www.onepetro.org/conference-paper/SEG-2008-2196 [retrieved on 2014-11-24]
- Robert W Clayton ET AL: "Absorbing boundary conditions for wave-equation migration", GEOPHYSICS VOL. 45 NO. 5, 1 January 1980 (1980-01-01), XP055154581, Retrieved from the Internet: URL:http://web.gps.caltech.edu/~clay/PDF/Clayton1980b.pdf [retrieved on 2014-11-24]

**Description**

BACKGROUND

Seismology is used for exploration, archaeological studies, and engineering projects that require geological information. Exploration seismology provides data that, when used in conjunction with other available geophysical, borehole, and geological data, can provide information about the structure and distribution of rock types and their contents. Such information greatly aids searches for water, geothermal reservoirs, and mineral deposits such as hydrocarbon reservoirs and ore veins. Most oil companies rely on exploration seismology to select sites in which to drill exploratory oil wells.

Traditional seismology employs artificially generated seismic waves to map subsurface structures. The seismic waves propagate from a source down into the earth and reflect from boundaries between subsurface structures. Surface receivers detect and record reflected seismic waves for later analysis. Though some large-scale structures can often be perceived from a direct examination of the recorded signals, generally the recorded signals are processed to remove distortion and reveal finer detail in the subsurface image. Various existing processing methods do not sufficiently remove distortion, and further they can be unduly demanding in terms of computational resources. Improved systems and methods are disclosed herein.

Documents cited during prosecution include US 2009/213693 A1, which discloses use of a wave propagator for transversely isotopic media.

SUMMARY

According to a first aspect of the present invention, there is provided a seismic imaging method that comprises: obtaining at least one shot gather for a survey region; performing reverse time migration of the shot gather, using 3D TTI equations, to determine horizontal stresses, parallel to formation layer boundaries, and vertical stresses, perpendicular to formation layer boundaries, of formation layers throughout a survey region while accounting for formations having tilted transverse isotropy; and constructing an image based at least in part on said horizontal and vertical stresses. According to a second aspect of the present invention, there is provided a seismic imaging system that comprises: at least one storage device that stores at least one shot gather from a seismic survey of a given survey region; a memory that stores seismic imaging software; and at least one processor coupled to the memory to execute the seismic imaging software, wherein the software configures the at least one processor to: retrieve said at least one shot gather from the storage device; perform reverse time migration of the shot gather, using 3D TTI equations, to determine horizontal stresses, parallel to formation layer boundaries, and vertical stresses, perpendicular to formation layer boundaries, of formation layers throughout a survey region while accounting for formations having tilted transverse isotropy; and construct an image based at least in part on said horizontal and vertical stresses.

BRIEF DESCRIPTION OF THE DRAWINGS

A better understanding of the various disclosed embodiments can be obtained when the following detailed description is considered in conjunction with the attached drawings, in which:

Fig. 1 shows an illustrative seismic survey environment;
Fig. 2 shows an illustrative seismic source and receiver geometry;
Fig. 3 shows an illustrative seismic survey recording system;
Fig. 4 shows illustrative seismic traces;
Fig. 5 shows an illustrative data volume in three dimensions;
Fig. 6 shows an illustrative imaging system; and
Fig. 7 shows a flowchart of an illustrative seismic imaging method.

While the invention is susceptible to various modifications and alternative forms, specific embodiments thereof are shown by way of example in the drawings and will herein be described in detail. It should be understood, however, that the drawings and detailed description are not intended to limit the disclosed embodiments to the particular forms shown, but on the contrary, the intention is to cover all modifications, equivalents and alternatives falling within the scope of the appended claims.

DETAILED DESCRIPTION

Disclosed herein are various systems and methods that convert seismic survey data into a subsurface data volume that users can view to understand and analyze the subsurface structures in the survey region. At least some of the disclosed systems and methods employ three-dimensional reverse time migration using wave equations adapted for use in formations having tilted transverse isotropy. Relative to existing methods, the disclosed systems and methods rely on fewer approximations and suffer fewer limitations on the circumstances in which they can be employed. Moreover, because the disclosed wave equations are derived from Hooke's law (and consequently they operate on fields that are directly tied to physical quantities), they demonstrate an increased stability relative to existing methods. Survey data analysts employing the disclosed systems and methods should obtain better images of the subsurface and be better able to identify reservoirs and deposits for commercial exploitation.

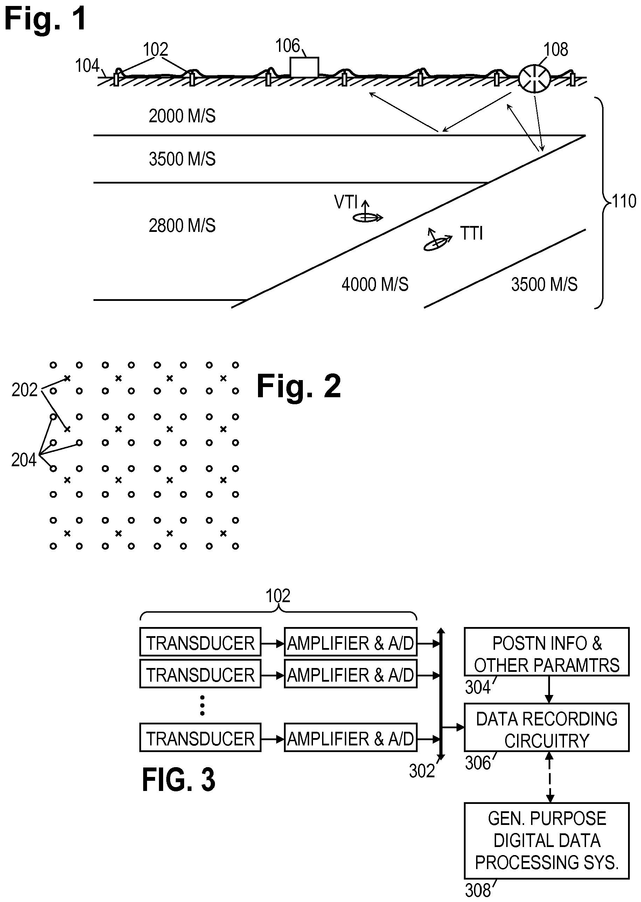

The disclosed systems and methods are best understood when described in an illustrative usage context. Accordingly, Fig. 1 shows an illustrative seismic survey environment, in which surveyors position an array of seismic receivers 102 in a spaced-apart arrangement on the earth's surface 104 to detect seismic waves. (The array typically extends for a couple of kilometers in each direction, and is moved periodically from place to place until the whole survey region has been covered.) The receivers 102 communicate wirelessly or via cable to a data acquisition unit 106 that receives, processes, and stores the seismic signal data collected by the receivers. The surveyors trigger a seismic energy source 108 (e.g., a vibrator truck) at multiple positions to generate seismic energy waves that propagate through the earth 110. Such waves reflect from acoustic impedance discontinuities to reach the receivers 102. Illustrative discontinuities include faults, boundaries between formation beds, and boundaries between formation fluids. The discontinuities appear as bright spots in the subsurface structure representation that is derived from the seismic signal data.

Fig. 1 further shows an illustrative subsurface model. In this model, the earth has three relatively flat formation layers and two dipping formation layers of varying composition and hence varying speeds of sound. Within each formation, the speed of sound can be isotropic (i.e., the same in every direction) or anisotropic. Due to the manner in which rocks are formed, nearly all anisotropic formations are transversely isotropic. In other words the speed of sound in anisotropic formations is the same in every "horizontal" direction, but is different for sound traveling in the "vertical" direction. Note, however, that geological activity can change formation orientations, turning a vertical transversely isotropic ("VTI") formation into a tilted transversely isotropic ("TTI") formation. In Fig. 1 shows the third flat layer as being VTI, while the first dipping formation layer is TTI.

Fig. 2 shows an illustrative geometry for source positions 202 and receiver positions 204, as they might be seen from an overhead view. Viable seismic survey geometries are infinite in variety, and can be gathered on a sector-by-sector basis, a rolling geometry basis, a moving-array basis, and various combinations thereof. The main message here is that the number of receiver signals acquired in response to each firing of the seismic source is fairly large, and when the number of source firings is taken into account, the resulting number of traces can easily reach into the millions.

Fig. 3 shows an illustrative seismic survey recording system having the receivers 102 coupled to a bus 302 to communicate digital signals to data recording circuitry 306. Position information sensors 304 (and optionally sensors for other parameters) are also coupled to the data recording circuitry 306 to enable the data recording circuitry to store additional information useful for interpreting the recorded data. Illustratively, such additional information can include source waveform characteristics, digitization settings, detected faults in the system, etc.

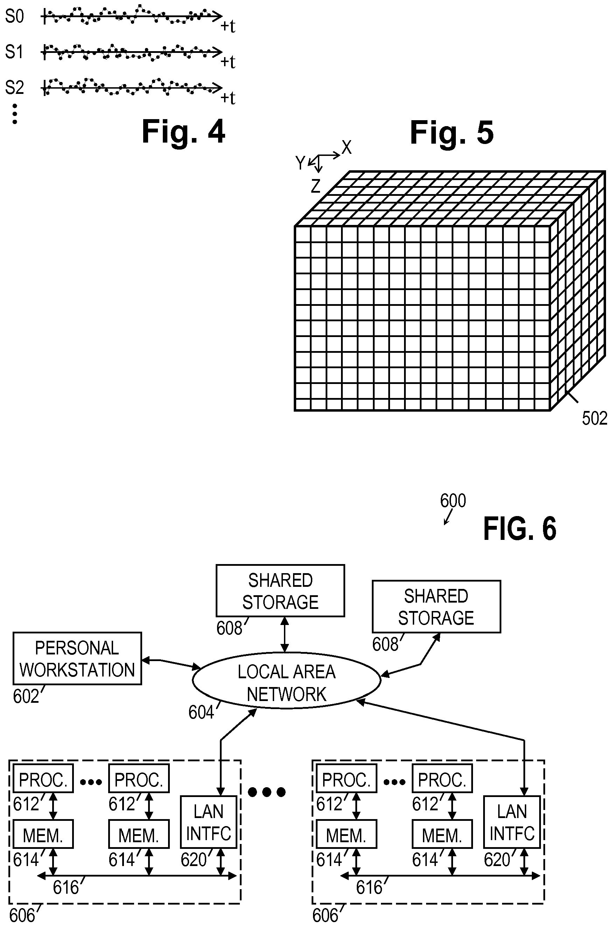

Recording circuitry 306 acquires the high speed data stream(s) from receivers 102 onto a nonvolatile storage medium such as a storage array of optical or magnetic disks. The data is stored in the form of (possibly compressed) seismic traces, each trace being the signal detected and sampled by a given receiver in response to a given shot. (The associated shot and receiver positions are also stored.) Illustrative seismic signals are shown in Fig. 4. The signals indicate some measure of seismic wave energy as a function of time (e.g., displacement, velocity, acceleration, pressure), and they are digitized at high resolution (e.g., 16 to 32 bits) at a programmable sampling rate (e.g., 400 to 1000 Hz) for a fixed duration after each shot (e.g., 30 seconds). Such signals can be grouped in different ways, and when so grouped, they are called a "gather". For example, a "common midpoint gather" is the group of traces that have a midpoint within a defined region. A "shot gather" is the group of traces recorded for a single firing of the seismic source.

A general purpose data processing system 308 receives the acquired seismic survey data from the data recording circuitry 306. In some cases the general purpose data processing system 308 is physically coupled to the data recording circuitry and provides a way to configure the recording circuitry and perform preliminary processing in the field. More typically, however, the general purpose data processing system is located at a central computing facility with adequate computing resources for intensive processing. The survey data can be transported to the central facility on physical media or communicated via a computer network. Processing system 308 includes a user interface having a graphical display and a keyboard or other method of accepting user input. enabling users to view and analyze the subsurface structure images derived from the seismic survey data.

The recorded seismic survey data is of little use when maintained in the format of Fig. 4. Although it is possible to plot the various recorded waveforms side by side in a plot that reveals large scale subsurface structures, such structures are distorted and finer structures cannot even be seen. Hence the data is processed to create a data volume, i.e., a three dimensional array of data values such as that shown in Fig. 5. The data volume represents some seismic attribute throughout the survey region. The three-dimensional array comprises uniformly-sized cells, each cell having a data value representing the seismic attribute for that cell. Various seismic attributes may be represented, and in some embodiments, each cell has multiple data values to represent multiple seismic attributes. Examples of suitable seismic attributes include reflectivity, acoustic impedance, acoustic velocity, and density. The volumetric data format readily lends itself to computational analysis and visual rendering, and for this reason, the data volume may be termed a "three-dimensional image" of the survey region.

Fig. 6 shows an illustrative computer system 600 for performing seismic data processing including three-dimensional reverse time migration with tilted transverse isotropy. A personal workstation 602 is coupled via a local area network (LAN) 604 to one or more multi-processor computers 606, which are in turn coupled via the LAN to one or more shared storage units 608. Personal workstation 602 serves as a user interface to the processing system, enabling a user to load survey data into the system, to retrieve and view image data from the system, and to configure and monitor the operation of the processing system. Personal workstation 602 may take the form of a desktop computer with a graphical display that graphically shows survey data and 3D images of the survey region, and with a keyboard that enables the user to move files and execute processing software.

LAN 604 provides high-speed communication between multi-processor computers 606 and with personal workstation 602. The LAN 604 may take the form of an Ethernet network.

Multi-processor computer(s) 606 provide parallel processing capability to enable suitably prompt conversion of seismic trace signals into a survey region image. Each computer 606 includes multiple processors 612, distributed memory 614, an internal bus 616, and a LAN interface 620. Each processor 612 operates on an allocated portion of the input data to produce a partial image of the seismic survey region. Associated with each processor 612 is a distributed memory module 614 that stores conversion software and a working data set for the processor's use. Internal bus 616 provides inter-processor communication and communication to the LAN networks via interface 620. Communication between processors in different computers 606 can be provided by LAN 604.

Shared storage units 608 may be large, stand-alone information storage units that employ magnetic disk media for nonvolatile data storage. To improve data access speed and reliability, the shared storage units 608 may be configured as a redundant disk array. Shared storage units 608 initially store a velocity data volume and shot gathers from a seismic survey. The illumination matrix values and/or reflectivity image volumes can be stored on shared storage units 608 for later processing. In response to a request from the workstation 602, the image volume data can be retrieved by computers 606 and supplied to workstation for conversion to a graphical image to be displayed to a user.

In this context, we turn to a discussion of the methods for converting seismic survey data into three dimensional data volumes. The following discussion necessarily omits a significant amount of detail that would be known to one of ordinary skill in the art, but which can be found in the references cited throughout. Part of the discussion assumes that a velocity distribution of the subsurface is known beforehand, as well as the orientation and degree of anisotropy. Many ways exist for determining the velocity distribution from the seismic survey data, including the traditional approach described Jon F. Claerbout, Fundamentals of Geophysical Data Processing, p. 246-56, and an iterative tomographic migration technique such as that described in U.S. Application 12/566,885, "Seismic Imaging Systems and Methods Employing Tomographic Migration-Velocity Analysis Using Common Angle Image Gathers" by Xia Fan et al,.

Given a volumetric velocity distribution, the reverse time migration technique consists of three stages: forward migration, reverse migration, and correlation. In this context, the term "migration" refers to the extrapolation of wave fields to determine, at each point in a volume, a wave intensity as a function of time. In the forward migration stage, a computer extrapolates a wave field from the shot into the volume, using a wave equation to determine how the seismic waves from the shot propagate forward in time. In the reverse migration stage, the computer uses the wave equation to extrapolate the wave field measured by the receivers into the volume, this time using the wave equation to determine how the seismic waves propagate in reverse, i.e., backward in time. In the third stage, the computer combines the two wave fields, in effect obtaining a zero-lag time correlation of the wave intensity function at each point in the volume. A high correlation indicates the presence of a reflector, and a low correlation indicates its absence.

The reverse time migration is repeated for each shot in the survey. The results are combined to build up a three-dimensional map of the subsurface. The quality of the map is strongly dependent on the precise manner in which migration is performed. In many cases, the wave equations that are employed to perform the wave field extrapolations employ assumptions and approximations in an effort to reduce computational requirements. Such assumptions and approximations can obscure or blur the features of the subsurface structure and/or cause those features to appear shifted from their true positions. Ideally, the wave equations used will be computationally tractable without suffering from such problems. Accordingly, there follows a detailed development and description of the wave equations and their usage in the seismic imaging systems and methods of the present disclosure. These equations are believed to alleviate such problems while remaining inexpensive in terms of required computational resources.

E.Duveneck, P.Milcik, P.M.Bakker, "Acoustic VTI wave equations and their application for anisotropic reverse-time migration", SEG Las Vegas 2008, p.2186-2190, discloses three-dimensional wave equations derived based on Hooke's law, with an assumption of vertical transverse isotropy (VTI) in the subsurface formations:

$$\frac{\partial^2 \sigma_H}{\partial t^2} = V_p^2 \left\{ (1+2\varepsilon) \left( \frac{\partial^2 \sigma_H}{\partial x^2} + \frac{\partial^2 \sigma_H}{\partial y^2} \right) + \sqrt{1+2\delta} \frac{\partial^2 \sigma_V}{\partial z^2} \right\} \tag{1}$$

$$\frac{\partial^2 \sigma_V}{\partial t^2} = V_p^2 \left\{ (1+2\delta) \left( \frac{\partial^2 \sigma_H}{\partial x^2} + \frac{\partial^2 \sigma_H}{\partial y^2} \right) + \frac{\partial^2 \sigma_V}{\partial z^2} \right\} \tag{2}$$

where $\sigma_H$ is the horizontal stress field, $\sigma_V$ is the vertical stress field, $V_p$ is the p-wave velocity, $\varepsilon$ and $\delta$ are the Thomsen anisotropy parameters (see L.Thomsen, "Weak elastic anisotropy", Geophysics 51, p.1954-1966, 1986), and x, y, z, and t are the normal space and time coordinates for the data volume. To account for tilted transverse isotropy (TTI), assume that a VTI formation is aligned with the subject formation by two rotations - a first counterclockwise rotation about the y axis by angle $\theta$ and a second counterclockwise rotation about the x axis by angle $\phi$ - respectively represented by the following rotation matrices A and B:

$$A = \begin{bmatrix} \cos\theta & 0 & \sin\theta \\ 0 & 1 & 0 \\ -\sin\theta & 0 & \cos\theta \end{bmatrix} \tag{3}$$

$$B = \begin{bmatrix} 1 & 0 & 0 \\ 0 & \cos\phi & \sin\phi \\ 0 & -\sin\phi & \cos\phi \end{bmatrix} \tag{4}$$

The resulting 3D wave equations are:

$$\frac{\partial^2 \sigma_H}{\partial t^2} = V_p^2 \left\{ \begin{array}{l} (1+2\varepsilon) \begin{bmatrix} \cos^2\theta \frac{\partial^2 \sigma_H}{\partial x^2} + (\sin^2\theta\sin^2\phi + \cos^2\phi)\frac{\partial^2 \sigma_H}{\partial y^2} + (\sin^2\theta\cos^2\phi + \sin^2\phi)\frac{\partial^2 \sigma_H}{\partial z^2} \\ -\cos^2\theta\sin 2\phi \frac{\partial^2 \sigma_H}{\partial y\partial z} - \sin 2\theta\cos\phi \frac{\partial^2 \sigma_H}{\partial x\partial z} - \sin 2\theta\sin\phi \frac{\partial^2 \sigma_H}{\partial x\partial y} \end{bmatrix} \\ +\sqrt{1+2\delta} \begin{bmatrix} \sin^2\theta \frac{\partial^2 \sigma_V}{\partial x^2} + \cos^2\theta\sin^2\phi \frac{\partial^2 \sigma_V}{\partial y^2} + \cos^2\theta\cos^2\phi \frac{\partial^2 \sigma_V}{\partial z^2} \\ +\cos^2\theta\sin 2\phi \frac{\partial^2 \sigma_V}{\partial y\partial z} + \sin 2\theta\cos\phi \frac{\partial^2 \sigma_V}{\partial x\partial z} + \sin 2\theta\sin\phi \frac{\partial^2 \sigma_V}{\partial x\partial y} \end{bmatrix} \end{array} \right\} \tag{5}$$

$$\frac{\partial^2 \sigma_V}{\partial t^2} = V_p^2 \left\{ \begin{array}{l} \sqrt{1+2\delta} \begin{bmatrix} \cos^2\theta \frac{\partial^2 \sigma_H}{\partial x^2} + (\sin^2\theta\sin^2\phi + \cos^2\phi)\frac{\partial^2 \sigma_H}{\partial y^2} + (\sin^2\theta\cos^2\phi + \sin^2\phi)\frac{\partial^2 \sigma_H}{\partial z^2} \\ -\cos^2\theta\sin 2\phi \frac{\partial^2 \sigma_H}{\partial y\partial z} - \sin 2\theta\cos\phi \frac{\partial^2 \sigma_H}{\partial x\partial z} - \sin 2\theta\sin\phi \frac{\partial^2 \sigma_H}{\partial x\partial y} \end{bmatrix} \\ + \begin{bmatrix} \sin^2\theta \frac{\partial^2 \sigma_V}{\partial x^2} + \cos^2\theta\sin^2\phi \frac{\partial^2 \sigma_V}{\partial y^2} + \cos^2\theta\cos^2\phi \frac{\partial^2 \sigma_V}{\partial z^2} \\ +\cos^2\theta\sin 2\phi \frac{\partial^2 \sigma_V}{\partial y\partial z} + \sin 2\theta\cos\phi \frac{\partial^2 \sigma_V}{\partial x\partial z} + \sin 2\theta\sin\phi \frac{\partial^2 \sigma_V}{\partial x\partial y} \end{bmatrix} \end{array} \right\} \tag{6}$$

Various techniques can be used to apply these wave equations for migration in a discretized volume. Three are discussed here: finite difference (FD), pseudospectral (PS), and hybrid. In the finite difference technique, the spatial second derivatives are calculated using high-order difference equations. See, e.g., M.A.Dablain, "The application of high-order differencing to the scalar wave equation", Geophysics vol. 51, No. 1, January 1986 p.54-66. Thus, for example:

$$\frac{\partial^2 \sigma(x)}{\partial x^2} = \Delta x^{-2} * \{-2.92722222\sigma(x) + 1.66666667[\sigma(x-1) + \sigma(x+1)]$$
$$-0.23809524[\sigma(x-2) + \sigma(x+2)] + 0.03968254[\sigma(x-3) + \sigma(x+3)] \quad (7)$$
$$-0.00496031[\sigma(x-4) + \sigma(x+4)] + 0.00031746[\sigma(x-5) + \sigma(x+5)]\}$$

in a tenth order approximation. For the cross-derivatives, a second order finite difference has been found to be adequate, e.g.:

$$\frac{\partial^2 \sigma(x,y)}{\partial x \partial y} = [\sigma(x-1,y-1) - \sigma(x-1,y+1) - \sigma(x+1,y-1) + \sigma(x+1,y+1)]/(4\Delta x \Delta y) \quad (8)$$

The spatial derivatives are repeatedly calculated for each point in the volume to step forward or backward in time in accordance with equations (5) and (6).

In the pseudospectral technique, the spatial second derivatives are calculated using the spatial Fourier Transform to find the transform coefficients for each wavenumber, multiplying each transform coefficient by a corresponding value as explained below, and taking the inverse transform. For each partial derivative along a given axis, the transform coefficients $c_n$ are multiplied by $ikn$, where $i = \sqrt{-1}$, $k=2\pi/N$, $n=1,2,...,N$, and $N$ is the number of coefficients of the spatial transform along that axis. The pseudospectral technique employs a spatial transform (and inverse transform) along each of the axes. It yields a simultaneous determination of the spatial second derivative at each point in the volume.

To determine the spatial second derivatives, the hybrid technique uses a combination of the pseudospectral technique and the finite difference technique. The pseudospectral technique is applied to determine partial derivatives along the horizontal (x- and y-axes). The finite-differencing technique is used to determine the partial derivatives along the vertical (z-axis). These operations are applied sequentially to determine the spatial second derivative at each point in the volume.

In each case, the calculated spatial derivatives can then be combined with the previously estimated distributions of velocity and anisotropy to determine the time progression of the horizontal and vertical stress fields in accordance with equations (5) and (6). Systems employing these equations do not suffer any dip limitations. There are, however, some stability considerations.

Equations (5) and (6) need to be recalculated for each cell at each time step in the shot interval. The larger the cells and the time step, the fewer the number of recalculations will be. However, if the cell dimensions or time step becomes too large, the numerical errors in the calculation will dominate, making the results meaningless. The cell dimensions in the horizontal direction ($\Delta x$ and $\Delta y$) should be limited to less than:

$$\Delta x \leq \frac{V_{p\min}}{S * f_{\text{Nyquist}}} \quad (9)$$

where $V_{p\min}$ is the smallest wave velocity, $f$ is the Nyquist frequency for the seismic signals, and $S$ is a empirically determined value which is less than 10 and which generally decreases for higher order differencing schemes. See, e.g., M.A.Dablain, "The application of high-order differencing to the scalar wave equation", Geophysics, vol. 51, no. 1 (Jan 1986). For 10th order FD applied to equations (5) and (6), $S=4$ is adequate to avoid grid dispersion. The optimal time step has been found to be:

$$\Delta t \leq \frac{2\,\Delta d_{\min}}{\sqrt{W}\,V_{p\max}} \left\{ \frac{(1+2\varepsilon_{\max})\left[2-\left(\cos^2\theta\sin2\phi + \sin2\theta(\sin\phi+\cos\phi)\right)\right]}{+\sqrt{1+2\delta_{\max}}\left[1+\left(\cos^2\theta\sin2\phi + \sin2\theta(\sin\phi+\cos\phi)\right)\right]} \right\}^{-1/2} \quad (10)$$

where $d_{\min}$ is the smallest dimension of a cell in the discretized volume, $V_{\max}$ is the highest wave velocity, $W$ is the sum of the absolute values of the finite difference equation coefficients (for 10th order FD, $W=6.826$), $\varepsilon_{\max}$ and $\delta_{\max}$ are the

maximum anisotropy parameters, and the combination of θ and φ is that combination taken from the discretized volume that yields the smallest time step. (For determining stability for the pseudospectral technique, the $\sqrt{W}$ should be replaced by π.)

Another consideration is the effect of the boundaries on the migration process. Recall that acoustic impedance mismatches cause reflections, so if the boundaries of the region are not treated carefully, extraneous reflections will adversely affect the image. In at least some embodiments, the disclosed systems and methods employ an "absorbing boundary condition" technique such as that taught by Cerjan, et al., "A nonreflecting boundary condition for discrete acoustic and elastic wave equations", Geophysics v.50, n.4, p.705-708, April 1985. In this technique, a 20-cell thick layer is provided along each boundary. Stress field values in this layer are multiplied at each time step by an attenuation coefficient that varies with distance from the boundary to reduce reflections from the boundary.

In other embodiments, the disclosed systems and methods employ a "perfectly matched layer" technique such as that taught by Komatitsch and Tromp, "A perfectly matched layer absorbing boundary condition for the second-order seismic wave equation", Geophys. J. Int. v.154, p. 146-153 (2003). In this technique, the wave equation used in the boundary layers is modified to include a damping factor for migration perpendicular to the boundary. To simplify the calculation, Komatitsch and Tromp split the equation into components. Adapting that approach to the VTI equations (1) and (2) above, the inventors have found that for damping along the x-axis:

$$\sigma_H = u_1 + u_2 + u_3 \text{ , and} \tag{11}$$

$$\sigma_V = u_4 + u_5 + u_6 \tag{12}$$

where $u_1$ through $u_6$ are determined with the following equations:

$$(\partial t + D(x))^2 u_1 = V^2(1 + 2\varepsilon)\frac{\partial^2 \sigma_H}{\partial x^2} \tag{13}$$

$$(\partial t + D(x))^3 u_2 = -V^2 D(x)(1 + 2\varepsilon)\frac{\partial \sigma_H}{\partial x} \tag{14}$$

$$\partial t^2 u_3 = V^2\left((1 + 2\varepsilon)\frac{\partial^2 \sigma_H}{\partial y^2} + \sqrt{1 + 2\delta}\frac{\partial^2 \sigma_V}{\partial z^2}\right) \tag{15}$$

$$(\partial t + D(x))^2 u_4 = V^2\sqrt{1 + 2\delta}\frac{\partial^2 \sigma_H}{\partial x^2} \tag{13}$$

$$(\partial t + D(x))^3 u_5 = -V^2 D(x)\sqrt{1 + 2\delta}\frac{\partial \sigma_H}{\partial x} \tag{14}$$

$$\partial t^2 u_6 = V^2\left(\sqrt{1 + 2\delta}\frac{\partial^2 \sigma_H}{\partial y^2} + \frac{\partial^2 \sigma_V}{\partial z^2}\right). \tag{15}$$

$D(x)$ is the damping factor that increases as you progress into the boundary layer:

$$D(x) = -\log(R) * \frac{4Vx^4}{2\delta^5} \tag{16}$$

where $R$ is the reflection coefficient (typically $10^{-3}$), V is wave velocity, and $\delta$ is the thickness of the boundary layer.

Similar equations provide attenuation for boundaries perpendicular to the y and z axes. For overlaps in the boundary layers (e.g., at the corners and edges of the discretized volume), the horizontal and vertical stress values are calculated with each set of equations applicable to the boundaries and then averaged together.

Yet another consideration during migration is the effect of anisotropy on the source field. The disclosed systems and methods can minimize source field artifacts by assuming a small isotropic region around the shot. A region of about 20 cells in diameter has been found to be adequate for most purposes.

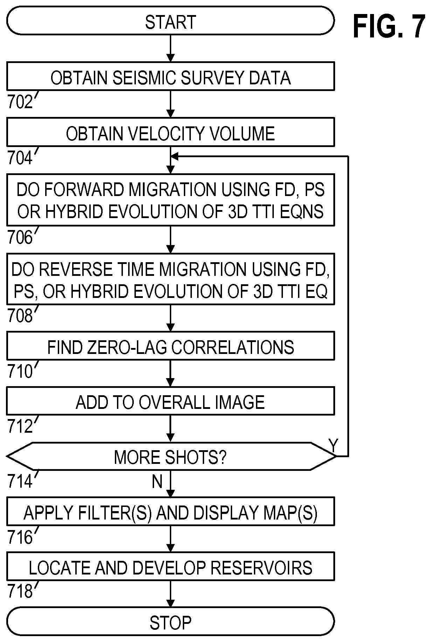

Given the foregoing discussion, we turn to Fig. 7 which outlines an illustrative seismic imaging method. In block 702, the seismic imaging system (e.g., a computer running seismic imaging software) retrieves configuration information and seismic trace data from a seismic survey database. The configuration information includes the dimensions of the subsurface volume to be imaged, the granularity of the cells (or grid points) in the volume, the size of the time steps, the locations of the shots and receivers, etc. The seismic trace data itself is generally stored in a structured form in a disk array to enable high bandwidth accessibility by a parallel processing computer system. In block 704 the seismic imaging system retrieves the velocity distribution model, which can include the amount and orientation of formation anisotropy.

In block 706, the system employs the three dimensional tilted transverse isotropy (3D TTI) equations to perform forward migration of a seismic shot, thereby determining for each grid point a horizontal and vertical stress as a function of time, $\sigma_{Hs}(t)$ and $\sigma_{Vs}(t)$ respectively. The system can use the finite difference technique, the pseudospectral technique, a hybrid technique, or any other suitable migration technique to do this determination.

In block 708, the system employs the 3D TTI equations to perform reverse time migration of the seismic traces from the receivers into the volume, thereby determining for each grid point a second horizontal and vertical stress as a function of time, $\sigma_{Hr}(t)$ and $\sigma_{Vr}(t)$ respectively. In block 710, the horizontal and vertical stress functions at each grid point are combined to determine an intensity at each grid point, e.g.:

$$I_H = \int \sigma_{Hs}(t)\sigma_{Hr}(t)\,dt \tag{17}$$

$$I_V = \int \sigma_{Vs}(t)\sigma_{Vr}(t)\,dt \tag{18}$$

$$I = \sqrt{I_H^2 + I_V^2} \tag{19}$$

And these intensities are added to the intensity values for the cumulative image in block 712.

In block 714, the system checks to determine if more shots exist in the survey data, and if so, the operations of blocks 706-712 are repeated with the next shot. Otherwise, in block 716 the system applies optional filters and makes the image available for a user to view. In some embodiments, the system applies a Laplacian filter as described in Yoon and Zhou, "Depth Imaging with Multiples", Geophysics v.66, n. 1, p.246-255 (2001), to eliminate low-frequency artifacts and other artifacts of the migration process:

$$I_{out}(x,y,z) = \frac{\partial^2 I_{in}}{\partial x^2} + \frac{\partial^2 I_{in}}{\partial y^2} + \frac{\partial^2 I_{in}}{\partial z^2} \tag{20}$$

In block 718 the system enables the user to interact with the image to manipulate it and gain a thorough understanding of the subsurface structure and hopefully identify reservoirs that can be developed. In at least some embodiments, the system user is able to apply different filters, rotate and slice the data volume, change colors and opacities, and manipulate the image in other ways as well.

It is contemplated that the operations described in Fig. 7 would be implemented in the form of software, which can be stored in computer memory, in long-term storage media, and/or in portable information storage media. It should be noted that illustrative method of Fig. 7 is provided as an explanatory aid. In practice, the various operations shown in Fig. 7 may be performed in different orders and are not necessarily sequential. For example, seismic data processing can benefit substantially from parallelism. In some processing method embodiments, data from different shots or survey regions can generally be processed independently. In other embodiments, the operations may be "pipelined" so that individual calculation operations are determined in the sequence shown, even though the operations are all occurring concurrently. Additional operations may be added to the illustrative method and/or several of the operations shown may be omitted.

Numerous variations and modifications will become apparent to those skilled in the art once the above disclosure is fully appreciated. It is intended that the following claims be interpreted to embrace all such variations and modifications.

**Claims**

1.  A computer-implemented seismic imaging method that comprises:

    obtaining at least one shot gather for a survey region (702);
    performing reverse time migration (708) of the shot gather, using 3D TTI equations, to determine horizontal stresses, parallel to formation layer boundaries, and vertical stresses, perpendicular to formation layer boundaries, of formation layers throughout a survey region while accounting for formations having tilted transverse isotropy; and
    constructing an image based at least in part on said horizontal and vertical stresses.

2.  The method of claim 1, further comprising one or both of:

    (i) displaying said image; and
    (ii) writing said image to an information storage medium (608).

3.  The method of claim 1 or 2, further comprising:

    carrying out forward migration of a shot corresponding to said shot gather to determine horizontal stresses, parallel to formation layer boundaries, and vertical stresses, perpendicular to formation layer boundaries, of the formation layers throughout a survey region while accounting for formations having tilted transverse isotropy (TTI),
    wherein said constructing includes combining said horizontal and vertical stresses from said forward and reverse time migrations.

4.  The method of claim 3, wherein said constructing further comprises one or both of:

    (i) repeating said performing, carrying out, and combining operations for other shot gathers and accumulating results from each shot gather to form said image; and;
    (ii) applying a filter to correlations of the horizontal and vertical stresses from the forward and reverse time migrations.

5.  The method of claim 3 or 4, wherein said forward migration employs an isotropic region around the shot to reduce migration artifacts.

6.  The method of any preceding claim, wherein said reverse time migration employs an absorbing boundary layer and/or a matched boundary layer to reduce extraneous reflections.

7.  The method of any preceding claim, wherein each said migration is performed in three dimensions.

8.  A seismic imaging system that comprises:

    at least one storage device (608) that stores at least one shot gather from a seismic survey of a given survey region;
    a memory (614) that stores seismic imaging software; and
    at least one processor (612) coupled to the memory to execute the seismic imaging software, wherein the software configures the at least one processor to:

        retrieve said at least one shot gather from the storage device;
        perform reverse time migration of the shot gather, using 3D TTI equations, to determine horizontal stresses, parallel to formation layer boundaries, and vertical stresses, perpendicular to formation layer boundaries, of formation layers throughout a survey region while accounting for formations having tilted transverse isotropy; and

construct an image based at least in part on said horizontal and vertical stresses.

**9.** The system of claim 8, wherein the software further configures the at least one processor (612) to do one or both of:

(i) display said image; and
(ii) write said image to an information storage medium.

**10.** The system of claim 8 or 9, wherein the software further configures the at least one processor (612) to:

implement forward migration of a shot corresponding to said shot gather to determine horizontal stresses, parallel to formation layer boundaries, and vertical stresses perpendicular to formation layer boundaries, of the formation layers throughout a survey region while accounting for formations having tilted transverse isotropy, and wherein as part of said constructing, the software configures the processor to combine said horizontal and vertical stresses from said forward and reverse time migrations.

**11.** The system of claim 10, wherein as part of said constructing the software further configures the processor (612) to do one or both of:

(i) repeat said performing, implementing, and combining operations for other shot gathers, and accumulate results from each shot gather to form said image; and
(ii) apply a filter to correlations of the horizontal stresses, parallel to formation layer boundaries, and vertical stresses perpendicular to formation layer boundaries, from the forward and reverse time migrations.

**12.** The system of claim 10, wherein as part of said forward migration the software employs an isotropic region around the shot to reduce migration artifacts.

**13.** The system any one of claims 8 to 12, wherein as part of said reverse time migration, the software employs an absorbing boundary layer and/or a matched boundary layer to reduce extraneous reflections.

**14.** The system of any one of claims 8 to 13, wherein the processor (612) performs each said migration in three dimensions.

**Patentansprüche**

**1.** Computerimplementiertes seismisches Bildgebungsverfahren, das umfasst:

Erhalten mindestens einer Aufnahmeerfassung für einen Untersuchungsbereich (702);
Durchführen von Umkehrzeitmigration (708) der Aufnahmeerfassung, unter Verwendung von 3D TTI-Gleichungen zur Bestimmung horizontaler Belastungen, parallel zu Formationsschichtgrenzen, und vertikaler Belastungen, senkrecht zu Formationsschichtgrenzen, von Formationsschichten überall in einem Untersuchungsbereich, bei gleichzeitigem Berücksichtigen von Formationen mit geneigttransversaler Isotropie; und
Erstellen eines Bildes, das mindestens teilweise auf den horizontalen und vertikalen Belastungen basiert.

**2.** Verfahren nach Anspruch 1, weiter umfassend eines oder beide von:

(i) Wiedergeben des Bildes; und
(ii) Schreiben des Bildes auf ein Datenspeichermedium (608).

**3.** Verfahren nach Anspruch 1 oder 2, weiter umfassend:

Ausführen einer Vorwärtsmigration einer Aufnahme entsprechend der Aufnahmeerfassung zur Bestimmung horizontaler Belastungen, parallel zu Formationsschichtgrenzen, und vertikaler Belastungen, senkrecht zu Formationsschichtgrenzen, der Formationsschichten überall in einem Untersuchungsbereich, bei gleichzeitigem Berücksichtigen von Formationen mit geneigttransversaler Isotropie (TTI),
wobei das Erstellen Kombinieren der horizontalen und vertikalen Belastungen aus den Vorwärts- und Umkehrzeitmigrationen aufweist.

4. Verfahren nach Anspruch 3, wobei das Erstellen weiter eines oder beide umfasst von:

(i) Wiederholen der Durchführungs-, Ausführungs- und Kombinationsoperationen für andere Aufnahmeerfassungen und Zusammenführen der Ergebnisse aus jeder Aufnahmeerfassung, um das Bild zu formen; und;
(ii) Anwenden eines Filters auf Wechselwirkungen der horizontalen und vertikalen Belastungen aus den Vorwärts- und Umkehrzeitmigrationen.

5. Verfahren nach Anspruch 3 oder 4, wobei die Vorwärtsmigration einen isotropischen Bereich um die Aufnahme herum einsetzt, um Migrationsartefakte zu reduzieren.

6. Verfahren nach einem der vorstehenden Ansprüche, wobei die Umkehrzeitmigration eine Absorptionsgrenzschicht und/oder eine angepasste Grenzschicht einsetzt, um Fremdreflexionen zu reduzieren.

7. Verfahren nach einem der vorstehenden Ansprüche, wobei jede Migration in drei Dimensionen durchgeführt wird.

8. Ein seismisches Bildgebungssystem, umfassend:

mindestens eine Speichervorrichtung (608), die mindestens eine Aufnahmeerfassung aus einer seismischen Untersuchung eines bestimmten Untersuchungsbereichs speichert;
einen Speicher (614), der seismische Bildgebungssoftware speichert; und
mindestens einen Prozessor (612), an den Speicher gekoppelt, zum Ausführen der seismischen Bildgebungssoftware, wobei die Software den mindestens einen Prozessor konfiguriert zum:

Abrufen der mindestens einen Aufnahmeerfassung von der Speichervorrichtung;
Durchführen einer Umkehrzeitmigration der Aufnahmeerfassung unter Verwendung von 3D TTI-Gleichungen zur Bestimmung horizontaler Belastungen, parallel zu Formationsschichtgrenzen, und vertikaler Belastungen, senkrecht zu Formationsschichtgrenzen, der Formationsschichten überall in einem Untersuchungsbereich, bei gleichzeitigem Berücksichtigen von Formationen mit geneigttransversaler Isotropie; und
Erstellen eines Bildes, das mindestens teilweise auf den horizontalen und vertikalen Belastungen basiert.

9. System nach Anspruch 8, wobei die Software den mindestens einen Prozessor (612) weiter konfiguriert zur Durchführung von einem oder beiden von:

(i) Wiedergeben des Bildes; und
(ii) Schreiben des Bildes auf ein Informations-Datenspeichermedium.

10. System nach Anspruch 8 oder 9, wobei die Software den mindestens einen Prozessor (612) weiter konfiguriert zum:

Implementieren von Vorwärtsmigration einer Aufnahme entsprechend der Aufnahmeerfassung zur Bestimmung horizontaler Belastungen, parallel zu Formationsschichtgrenzen, und vertikaler Belastungen, senkrecht zu Formationsschichtgrenzen, der Formationsschichten überall in einem Untersuchungsbereich, bei gleichzeitigem Berücksichtigen von Formationen mit geneigttransversaler Isotropie, und
wobei die Software, als Teil des Erstellens, den Prozessor zum Kombinieren der horizontalen und vertikalen Belastungen aus den Vorwärts- und Umkehrzeitmigrationen konfiguriert.

11. System nach Anspruch 10, wobei die Software, als Teil des Erstellens, den Prozessor (612) weiter zur Durchführung von einem oder beiden der Folgenden konfiguriert:

(i) Wiederholen der Durchführungs-, Implementierungs- und Kombinationsoperationen für andere Aufnahmeerfassungen und Zusammenführen der Ergebnisse aus jeder Aufnahmeerfassung, um das Bild zu formen; und
(ii) Anwenden eines Filters auf Wechselwirkungen der horizontalen Belastungen, parallel zu Formationsschichtgrenzen, und vertikalen Belastungen, senkrecht zu Formationsschichtgrenzen, aus den Vorwärts- und Umkehrzeitmigrationen.

12. System nach Anspruch 10, wobei die Software, als Teil der Vorwärtsmigration, einen isotropischen Bereich um die Aufnahme herum einsetzt, um Migrationsartefakte zu reduzieren.

13. System nach einem der Ansprüche 8 bis 12, wobei die Software, als Teil der Umkehrzeitmigration, eine Absorptionsgrenzschicht und/oder eine angepasste Grenzschicht einsetzt, um Fremdreflexionen zu reduzieren.

**14.** System nach einem der Ansprüche 8 bis 13, wobei der Prozessor (612) jede Migration in drei Dimensionen ausführt.

**Revendications**

**1.** Procédé d'imagerie sismique mis en oeuvre par ordinateur, comprenant :

l'obtention d'au moins un relevé de tirs pour une région d'étude (702) ;
la réalisation d'une migration à retournement temporel (708) du relevé de tirs, en utilisant des équations TTI 3D, pour déterminer des contraintes horizontales, parallèles à des frontières de couches de formation, et des contraintes verticales, perpendiculaires à des frontières de couches de formation, de couches de formation à travers une région d'étude tout en tenant compte de formations ayant une isotropie transversale inclinée ; et
la construction d'une image sur la base au moins en partie desdites contraintes horizontales et verticales.

**2.** Procédé selon la revendication 1, comprenant en outre l'un ou les deux de :

(i) l'affichage de ladite image ; et
(ii) l'écriture de ladite image sur un support de mémorisation d'informations (608).

**3.** Procédé selon la revendication 1 ou 2, comprenant en outre :

l'exécution d'une migration vers l'avant d'un tir correspondant au dit relevé de tirs pour déterminer des contraintes horizontales, parallèles à des frontières de couches de formation, et des contraintes verticales, perpendiculaires à des frontières de couches de formation, des couches de formation à travers une région d'étude tout en tenant compte de formations ayant une isotropie transversale inclinée (TTI),
dans lequel ladite construction comprend la combinaison desdites contraintes horizontales et verticales à partir desdites migrations vers l'avant et à retournement temporel.

**4.** Procédé selon la revendication 3, dans lequel ladite construction comprend en outre l'une ou les deux de :

(i) la répétition desdites opérations de réalisation, d'exécution et de combinaison pour d'autres relevés de tirs et l'accumulation des résultats de chaque relevé de tirs pour constituer ladite image ; et
(ii) l'application d'un filtre à des corrélations des contraintes horizontales et verticales à partir des migrations vers l'avant et à retournement temporel.

**5.** Procédé selon la revendication 3 ou 4, dans lequel ladite migration vers l'avant emploie une région isotrope autour du tir pour réduire des artefacts de migration.

**6.** Procédé selon l'une quelconque des revendications précédentes, dans lequel ladite migration à retournement temporel emploie une couche de frontières absorbantes et/ou une couche de frontières concordantes pour réduire des réflexions parasites.

**7.** Procédé selon l'une quelconque des revendications précédentes, dans lequel chaque dite migration est effectuée en trois dimensions.

**8.** Système d'imagerie sismique comprenant :

au moins un dispositif de mémorisation (608) qui mémorise au moins un relevé de tirs à partir d'une étude sismique d'une région d'étude donnée ;
une mémoire (614) qui mémorise un logiciel d'imagerie sismique ; et
au moins un processeur (612) couplé à la mémoire pour exécuter le logiciel d'imagerie sismique, dans lequel le logiciel configure l'au moins un processeur pour :

récupérer ledit au moins un relevé de tirs à partir du dispositif de mémorisation ;
réaliser une migration à retournement temporel du relevé de tirs, en utilisant des équations TTI 3D, pour déterminer des contraintes horizontales, parallèles à des frontières de couches de formation, et des contraintes verticales, perpendiculaires à des frontières de couches de formation, de couches de formation à travers une région d'étude tout en tenant compte de formations ayant une isotropie transversale inclinée (TTI) ; et

construire une image sur la base au moins en partie desdites contraintes horizontales et verticales.

**9.** Système selon la revendication 8, dans lequel le logiciel configure en outre l'au moins un processeur (612) pour effectuer l'un ou les deux de :

(i) l'affichage de ladite image ; et
(ii) l'écriture de ladite image sur un support de mémorisation d'informations.

**10.** Système selon la revendication 8 ou 9, dans lequel le logiciel configure en outre l'au moins un processeur (612) pour :

la mise en oeuvre d'une migration vers l'avant d'un tir correspondant au dit relevé de tirs pour déterminer des contraintes horizontales, parallèles à des frontières de couches de formation, et des contraintes verticales, perpendiculaires à des frontières de couches de formation, des couches de formation à travers une région d'étude tout en tenant compte de formations ayant une isotropie transversale inclinée (TTI), et
dans lequel, dans le cadre de ladite construction, le logiciel configure le processeur pour la combinaison desdites contraintes horizontales et verticales à partir desdites migrations vers l'avant et à retournement temporel.

**11.** Système selon la revendication 10, dans lequel, dans le cadre de ladite construction, le logiciel configure en outre le processeur (612) pour effectuer l'un ou les deux de :

(i) la répétition desdites opérations de réalisation, de mise en oeuvre et de combinaison pour d'autres relevés de tirs et l'accumulation des résultats de chaque relevé de tirs pour constituer ladite image ; et
(ii) l'application d'un filtre à des corrélations des contraintes horizontales, parallèles à des frontières de couches de formation, et des contraintes verticales, perpendiculaires à des frontières de couches de formation, à partir des migrations vers l'avant et à retournement temporel.

**12.** Système selon la revendication 10, dans lequel, dans le cadre de ladite migration vers l'avant, le logiciel emploie une région isotrope autour du tir pour réduire des artefacts de migration.

**13.** Système selon l'une quelconque des revendications 8 à 12, dans lequel, dans le cadre de ladite migration à retournement temporel, le logiciel emploie une couche de frontières absorbantes et/ou une couche de frontières concordantes pour réduire des réflexions parasites.

**14.** Système selon l'une quelconque des revendications 8 à 13, dans lequel le processeur (612) effectue chaque dite migration en trois dimensions.

# Fig. 1

2000 M/S

3500 M/S

2800 M/S

VTI

TTI

4000 M/S

3500 M/S

# Fig. 2

# FIG. 3

| TRANSDUCER | → | AMPLIFIER & A/D |
| TRANSDUCER | → | AMPLIFIER & A/D |
| TRANSDUCER | → | AMPLIFIER & A/D |

POSTN INFO &
OTHER PARAMTRS

DATA RECORDING
CIRCUITRY

GEN. PURPOSE
DIGITAL DATA
PROCESSING SYS.

S0 +t

S1 +t

S2 +t

## Fig. 4

## Fig. 5

502

600

## FIG. 6

SHARED STORAGE
608'

SHARED STORAGE
608'

PERSONAL WORKSTATION
602'

LOCAL AREA NETWORK
604'

PROC. ••• PROC.
612'     612'
MEM.    MEM.    LAN INTFC
614'    614'    620'
616'
606'

•••

PROC. ••• PROC.
612'     612'
MEM.    MEM.    LAN INTFC
614'    614'    620'
616'
606'

**FIG. 7**

START

OBTAIN SEISMIC SURVEY DATA
702

OBTAIN VELOCITY VOLUME
704

DO FORWARD MIGRATION USING FD, PS OR HYBRID EVOLUTION OF 3D TTI EQNS
706

DO REVERSE TIME MIGRATION USING FD, PS, OR HYBRID EVOLUTION OF 3D TTI EQ
708

FIND ZERO-LAG CORRELATIONS
710

ADD TO OVERALL IMAGE
712

MORE SHOTS?   Y
714   N

APPLY FILTER(S) AND DISPLAY MAP(S)
716

LOCATE AND DEVELOP RESERVOIRS
718

STOP

**EP 2 497 043 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009213693 A1

- US 566885 A

### Non-patent literature cited in the description

- **JON F. CLAERBOUT.** *Fundamentals of Geophysical Data Processing,* 246-56
- **E.DUVENECK ; P.MILCIK ; P.M.BAKKER.** *Acoustic VTI wave equations and their application for anisotropic reverse-time migration,* 2008, 2186-2190
- **L.THOMSEN.** *Weak elastic anisotropy'', Geophysics,* 1986, vol. 51, 1954-1966
- **M.A.DABLAIN.** The application of high-order differencing to the scalar wave equation. *Geophysics,* January 1986, vol. 51 (1), 54-66

- **M.A.DABLAIN.** The application of high-order differencing to the scalar wave equation. *Geophysics,* January 1986, vol. 51 (1
- **CERJAN et al.** A nonreflecting boundary condition for discrete acoustic and elastic wave equations. *Geophysics,* April 1985, vol. 50 (4), 705-708
- **KOMATITSCH ; TROMP.** A perfectly matched layer absorbing boundary condition for the second-order seismic wave equation. *Geophys. J. Int.,* 2003, vol. 154, 146-153
- **YOON ; ZHOU.** Depth Imaging with Multiples. *Geophysics,* 2001, vol. 66 (1), 246-255